# EUROPEAN PATENT APPLICATION

(11) **EP 4 564 536 A1**
(43) Date of publication of application: **04.06.2025**
(21) Application number: 23884396.5
(22) Date of filing: 23.08.2023
(51) Int. Cl.: H01M 10/658, H01M 10/625, H01M 50/244, H01M 50/249

(54) **HEAT INSULATING PROTECTIVE LAYER, BOX, BATTERY, AND ELECTRICAL APPARATUS**

(30) Priority: 31.10.2022 CN 202211366510
(71) Applicant: Contemporary Amperex Technology (Hong Kong) Limited, Hong Kong (HK)
(72) Inventor: KE, Jianhuang, Ningde, Fujian 352100 (CN); CHEN, Xiaobo, Ningde, Fujian 352100 (CN); LI, Yao, Ningde, Fujian 352100 (CN)
(74) Representative: Ziebig Hengelhaupt Intellectual Property Attorneys Patentanwaltskanzlei PartGmbB
(86) International application number: PCT/CN2023/114480
(87) International publication number: WO 2024/093459

(57) **Abstract**

This application relates to the technical field of protection materials, and in particular, to a heat-insulation protection layer, a box, a battery, and an electrical device. During thermal runaway of the battery, the heat-insulation protection layer can reduce the risk of damage caused by heat to an outer envelope of a battery pack, and reduce the risk of heat leaking to the outside to generate open flames and fire. The heat-insulation protection layer includes a first surface and a second surface oriented back-to-back against each other. The first surface is configured to face a heat source. An axial heat transfer coefficient T1 of the heat-insulation protection layer is less than a transverse heat transfer coefficient T2 of the heat-insulation protection layer. Heat generated by the heat source radiates to the first surface. When a temperature of the first surface is less than or equal to 1600 °C, that is, when the heat radiates to the first surface and makes the temperature of the first surface be less than or equal to 1600 °C, a temperature of the second surface does not exceed 1200 °C. When a specified amount of heat radiates from the heat source, the heat-insulation protection layer can effectively block the heat and control the temperature to fall within a specified range, thereby reducing the risk that the high temperature damages the structure disposed at the second surface.

## Description

### CROSS-REFERENCE TO RELATED APPLICATIONS

This application claims priority to Chinese Patent Application No. 202211366510.1, filed on October 31, 2022, which is incorporated herein by reference in its entirety.

### TECHNICAL FIELD

This application relates to the technical field of protection materials, and in particular, to a heat-insulation protection layer, a box, a battery, and an electrical device.

### BACKGROUND

During thermal runaway of a battery, an outer envelope of a battery pack is prone to damage caused by the thermal runaway. Consequently, the thermal runaway gas escapes from the damaged point to release pressure directly, and the battery pack is prone to catch fire outside the battery pack. Existing technical solutions primarily use materials such as a mica board as a cover for protection. However, with the increase in the battery cell energy density, the heat generated by thermal runaway of the battery cell increases gradually. For a battery product with a relatively high energy density, the mica board is no longer enough to provide effective protection.

### SUMMARY

A main objective of this application is to provide a heat-insulation protection layer to exert a heat insulation effect. During thermal runaway of a battery, the heat-insulation protection layer can reduce the risk of damage caused by heat to an outer envelope of a battery pack, and reduce the risk of heat leaking to the outside to generate open flames and fire.

To achieve the above objective, this application discloses a heat-insulation protection layer. The heat-insulation protection layer includes a first surface and a second surface oriented back-to-back against each other. The first surface is configured to face a heat source.

A thickness direction of the heat-insulation protection layer with a thickness between the first surface and the second surface is defined as an axial direction, and a direction intersecting the thickness direction at an angle is defined as a transverse direction.

An axial heat transfer coefficient of the heat-insulation protection layer along the axial direction is T1, and a transverse heat transfer coefficient of the heat-insulation protection layer along the transverse direction is T2, satisfying: T1 < T2, so that when a temperature of the first surface is less than or equal to 1600 °C, a temperature of the second surface does not exceed 1200 °C.

Optionally, T1 and T2 satisfy: T2/T1 ≥ 2.

When T2/T1 ≥ 2 and the temperature of the first surface is less than or equal to 1600 °C, the temperature of the second surface does not exceed 1200 °C.

Optionally, T1 and T2 satisfy: T2/T1 ≥ 100.

When T2/T1 ≥ 100, the temperature of the second surface is lower than or equal to 927 °C, thereby reducing the risk that the temperature of the second surface reaches 1000 °C or above.

Optionally, T1 satisfies: 0.1 W/(m×K) ≤ T1 ≤ 50 W/(m×K); and/or
T2 satisfies: 100 W/(m×K) ≤ T2 ≤ 1500 W/(m×K).

In order for the heat transfer coefficient of the heat-insulation protection layer in the transverse direction to be greater than the heat transfer coefficient in the axial direction, the axial heat transfer coefficient T1 of the heat-insulation protection layer satisfies: 0.1 W/(m×K) ≤ T1 ≤ 50 W/(m×K), and the transverse heat transfer coefficient T2 satisfies: 100 W/(m×K) ≤ T2 ≤ 1500 W/(m×K).

Optionally, the heat source includes a battery pack. A battery cell energy density of the battery pack is defined as E, satisfying: E ≤ 1000. T2 and E satisfy a relation: T2/E ≥ 0.1. T2 is in units of W/(m×K), and E is in units of Wh/L.

When E ≤ 1000 Wh/L, the heat generated by thermal runaway is 1600 °C or less, and the temperature of the first surface is less than or equal to 1600 °C. When the ratio of the transverse heat transfer coefficient T2 to the battery cell energy density E is greater than or equal to 0.1 and when the temperature of the first surface of the heat-insulation protection layer is less than or equal to 1600 °C, the temperature of the second surface does not exceed 1200 °C.

Optionally, T2 and E satisfy a relation: 0.1 ≤ T2/E ≤ 2.73.

When E ≤ 1000 Wh/L, the heat generated by thermal runaway is 1600 °C or less, and the temperature of the first surface is less than or equal to 1600 °C. When the ratio of the transverse heat transfer coefficient T2 to the battery cell energy density E is greater than or equal to 0.1 and when the temperature of the first surface of the heat-insulation protection layer is less than or equal to 1600 °C, the temperature of the second surface does not exceed 1200 °C, and the ratio of the transverse heat transfer coefficient T2 to the battery cell energy density E is less than or equal to 2.73, thereby reducing the cost of preparing the heat-insulation protection layer.

Optionally, the heat source includes the battery pack, and a battery cell energy density of the battery pack is defined as E, satisfying: E ≤ 550 Wh/L. T2 and E satisfy a relation: 1.82 ≤ T2/E ≤ 2.73.

When E ≤ 550 Wh/L, the heat generated by thermal runaway is 1000 °C or less, and the temperature of the first surface is less than or equal to 1000 °C. When the ratio of the transverse heat transfer coefficient T2 to the battery cell energy density E ranges from 1.82 to 2.73 and the temperature of the first surface of the heat-insulation protection layer is less than or equal to 1000 °C, the temperature of the second surface does not exceed 600 °C.

Optionally, the heat source includes a battery pack. A battery cell energy density of the battery pack is defined as E, and a thickness of the heat-insulation protection layer is defined as D. E and D satisfy a relation: D/E ≥ 1.8× 10⁻³, where E ≤ 550 Wh/L, and D is in units of mm.

When E ≤ 550 Wh/L, the heat generated by thermal runaway is 1000 °C or less, and the temperature of the first surface is less than or equal to 1000 °C. When E and D satisfy: D/E ≥ 1.8×10⁻³ and the temperature of the first surface is less than or equal to 1000 °C, the temperature of the second surface does not exceed 700 °C.

Optionally, the heat source includes a battery pack. A battery cell energy density of the battery pack is defined as E, a thickness of the heat-insulation protection layer is defined as D, satisfying: D ≥ 2. E and D satisfy a relation: D/E ≥ 2.0× 10⁻³, where E is in units of Wh/L, and D is in units of mm.

When D ≥ 2 and E and D satisfy the relation D/E ≥ 2.0× 10⁻³, E is less than or equal to 1000 Wh/L. When E ≤ 1000 Wh/L, the heat generated by thermal runaway is 1600 °C or less, and the temperature of the first surface is less than or equal to 1600 °C. When the temperature of the first surface is less than or equal to 1600 °C, the temperature of the second surface does not exceed 1200 °C.

Optionally, the heat source includes a battery pack. A battery cell energy density of the battery pack is defined as E, and a thickness of the heat-insulation protection layer is defined as D. E and D satisfy a relation: D/E ≥ 7.0× 10⁻³, where E ≤ 1000.

When E ≤ 1000 Wh/L, the heat generated by thermal runaway is 1600 °C or less, and the temperature of the first surface is less than or equal to 1600 °C. When E and D satisfy: D/E ≥ 7.0×10⁻³ and the temperature of the first surface is less than or equal to 1600 °C, the temperature of the second surface does not exceed 600 °C.

Optionally, E and D satisfy a relation: D/E ≤ 5.0× 10⁻³, where E is in units of Wh/L, and D is in units of mm.

When 1.8×10⁻³ ≤ D/E ≤ 5.0× 10⁻³ or 2.0×10⁻³ ≤ D/E ≤ 5.0× 10⁻³, the thickness D of the heat-insulation protection layer is ensured not to be overly thick. In this case, the heat-insulation protection layer is prevented from being damaged and no design redundancy exists.

Optionally, T1, T2, and E satisfy a relation: (T2/T1)/E ≥ 0.002, T1 and T2 are in units of W/(m×K), and E is in units of Wh/L.

When E ≤ 1000 Wh/L, the heat generated by thermal runaway is 1600 °C or less, and the temperature of the first surface is less than or equal to 1600 °C. When (T2/T1)/E ≥ 0.002 and the temperature of the first surface is less than or equal to 1600 °C, the temperature of the second surface does not exceed 1200 °C.

Optionally, T1, T2, and E satisfy a relation: 0.002 ≤ (T2/T1)/E ≤ 29.091.

When E ≤ 1000 Wh/L, the heat generated by thermal runaway is 1600 °C or less, and the temperature of the first surface is less than or equal to 1600 °C. When (T2/T1)/E ≥ 0.002 and the temperature of the first surface is less than or equal to 1600 °C, the temperature of the second surface does not exceed 1200 °C and (T2/T1)/E ≤ 29.091, thereby reducing the cost of preparing the heat-insulation protection layer and improving the cost-effectiveness.

Optionally, T1, T2, and E satisfy a relation: 10 ≤ (T2/T1)/E ≤ 29.091, where T1 and T2 are in units of W/(m×K).

When E ≤ 1000 Wh/L, the heat generated by thermal runaway is 1600 °C or less, and the temperature of the first surface is less than or equal to 1600 °C. When 10 ≤ (T2/T1)/E ≤ 29.091 and the temperature of the first surface is less than or equal to 1600 °C, the temperature of the second surface does not exceed 600 °C.

Optionally, T1, T2, and E satisfy a relation: 18 ≤ (T2/T1)/E ≤ 29.091, and E ≤ 550.

When E ≤ 550 Wh/L, the heat generated by thermal runaway is 1000 °C or less, and the temperature of the first surface is less than or equal to 1000 °C. When 18 ≤ (T2/T1)/E ≤ 29.091 and the temperature of the first surface is less than or equal to 1000 °C, the temperature of the second surface does not exceed 600 °C.

Optionally, the heat-insulation protection layer includes a graphite layer. A graphite material of the graphite layer is flake-shaped. The flake graphite material is arranged in an oriented layered structure.

By controlling the orientation consistency of the graphite flakes, this application can obtain a first protection material with the transverse heat transfer coefficient different from the axial heat transfer coefficient.

Optionally, the heat-insulation protection layer includes a structure formed by stacking at least two layers. The structure of at least two layers includes a first-layer structure and a second-layer structure. The first-layer structure faces the heat source. The second-layer structure is disposed on one side, oriented away from the heat source, of the first-layer structure. A heat transfer coefficient of the first-layer structure is greater than a heat transfer coefficient of the second-layer structure.

The two-layer heat-insulation protection layer may be understood as a material of a high heat transfer coefficient (first-layer structure) used in a direction toward the battery pressure relief mechanism, and a material of a low heat transfer coefficient (second-layer structure) used in a direction away from the pressure relief mechanism. The ultimately compounded material possesses both a high transverse heat transfer coefficient for a side close to the pressure relief mechanism and a low axial heat transfer coefficient.

Optionally, the heat-insulation protection layer further includes a third-layer structure. The third-layer structure is disposed on one side, oriented away from the second-layer structure, of the first-layer structure. The third-layer structure faces the heat source. The heat transfer coefficient of the first-layer structure is greater than a heat transfer coefficient of the third-layer structure.

With the three-layer design, the second-layer structure and the third-layer structure are made of a material of a low heat transfer coefficient, and the interlayer (first-layer structure) is made of a material of a high heat transfer coefficient. The heat insulated by the third-layer structure is dissipated to the surroundings quickly through the first-layer structure, and is finally insulated by the second-layer material to ensure that the temperature of the heat reaching the center of the second-layer structure is low enough.

Optionally, an axial heat transfer coefficient of the first-layer structure is greater than an axial heat transfer coefficient of the second-layer structure. The axial heat transfer coefficient of the first-layer structure is greater than an axial heat transfer coefficient of the third-layer structure.

By setting the axial heat transfer coefficient of the first-layer structure to be greater than the axial heat transfer coefficient of the second-layer structure, the heat of the second-layer structure is depleted in the axial direction when the heat is transferred to the second-layer structure through the first-layer structure, and the temperature is prevented from being overly high on a side, oriented away from the first-layer structure, of the second-layer structure. By setting the axial heat transfer coefficient of the first-layer structure to be greater than the axial heat transfer coefficient of the third-layer structure, the heat insulated by the third-layer structure is dissipated to the surroundings quickly through the first-layer structure after the heat reaches the first-layer structure through the third-layer structure, and the heat is finally insulated by the second-layer material to ensure that the temperature of the heat reaching the center of the second-layer structure is low enough.

Optionally, the first-layer structure is made of copper, nickel, steel, or aluminum. The second-layer structure is a graphite layer. A graphite material of the graphite layer is flake-shaped. The flake graphite material is arranged in an oriented layered structure.

With a relatively high heat transfer coefficient, copper, nickel, steel, or aluminum used as the first-layer structure can dissipate heat quickly. With a relatively low axial heat transfer coefficient T1, the graphite layer used as the second-layer structure can deplete the heat quickly while the first-layer structure dissipates the heat quickly. When the heat is transferred to the second-layer structure, the temperature of the second-layer structure is decreased.

Optionally, the first-layer structure is made of copper, nickel, steel, or aluminum. The second-layer structure and the third-layer structure are graphite layers. A graphite material of the graphite layers is flake-shaped. The flake graphite material is arranged in an oriented layered structure.

The graphite layer possesses a relatively low axial heat transfer coefficient T1 and a relatively high transverse heat transfer coefficient T2. As the third-layer structure, the graphite layer can deplete the heat quickly while the heat is dissipated quickly in the transverse direction. When the heat is transferred to the first-layer structure, the temperature of the first-layer structure is decreased. In addition, the first-layer structure is made of copper, nickel, steel, or aluminum that is of a relatively high heat transfer coefficient, and is configured to dissipate heat quickly. When the heat reaches the second-layer structure, the second-layer structure is a graphite layer, and further depletes the heat quickly while the heat is dissipated quickly in the transverse direction, so that the temperature of the heat transferred to the second surface does not exceed 1200 °C.

This application provides a box. The box is configured to contain an electrical device. The heat-insulation protection layer is disposed on an inner surface of the box.

The box equipped with the heat-insulation protection layer is configured to contain the electrical device. When the electrical device is thermally runaway and the temperature of the first surface is less than or equal to 1600 °C, the temperature of the second surface does not exceed 1200 °C. The heat-insulation protection layer can effectively block heat and control the temperature to fall within a specified range, thereby solving the problem of high temperature on the second surface and reducing the risk of damage caused by the high temperature to the structure disposed at the second surface.

This application provides a battery. The battery includes the box and a battery pack disposed in the box. A battery pressure relief mechanism is disposed on the battery pack. A projection of the heat-insulation protection layer on the battery pack covers the battery pressure relief mechanism.

The box equipped with the heat-insulation protection layer is configured to accommodate the battery pack, thereby exerting a heat insulation effect. During thermal runaway of the battery, the heat-insulation protection layer can reduce the risk of damage caused by heat to the outer envelope of the battery pack, and reduce the risk of heat leaking to the outside to generate open flames and fire.

Optionally, an area of the heat-insulation protection layer is larger than an area of the battery pressure relief mechanism.

In the case of thermal runaway, the hot air ejected from the battery pressure relief mechanism assumes a fan shape. With the area of the heat-insulation protection layer being larger than the area of the battery pressure relief mechanism, the heat-insulation protection layer can effectively cover the hot air flow.

This application provides an electrical device, and the electrical device includes the battery.

With the heat-insulation protection layer, the battery is protected more securely, and the electrical device containing the above battery is also well protected.

The heat-insulation protection layer of this application is designed to exert a heat insulation effect. During thermal runaway of a battery, the heat-insulation protection layer can reduce the risk of damage caused by heat to an outer envelope of a battery pack, and reduce the risk of heat leaking to the outside to generate open flames and fire. The heat-insulation protection layer includes a first surface and a second surface oriented back-to-back against each other. The first surface is configured to face a heat source. The thickness direction of the heat-insulation protection layer with a thickness between the first surface and the second surface is defined as an axial direction, and the direction intersecting the thickness direction at an angle is defined as a transverse direction. An axial heat transfer coefficient of the heat-insulation protection layer along the axial direction is T1, and a transverse heat transfer coefficient of the heat-insulation protection layer along the transverse direction is T2, satisfying: T1 < T2. Heat generated by the heat source radiates to the first surface. When the first surface faces the heat source and the temperature of the first surface is less than or equal to 1600 °C, that is, when the heat radiates to the first surface and makes the temperature of the first surface be less than or equal to 1600 °C, the temperature of the second surface does not exceed 1200 °C. In this way, when a specified amount of heat radiates from the heat source, the heat-insulation protection layer can effectively block the heat and control the temperature to fall within a specified range, thereby solving the problem of high temperature generated on the second surface, and reducing the risk that the high temperature damages the structure disposed at the second surface.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below are merely a part of embodiments of this application. A person of ordinary skill in the art may derive other drawings from the illustrated structure without making any creative effort.
FIG. 1 is a schematic structural diagram of a heat-insulation protection layer according to an embodiment of this application;
FIG. 2 is a schematic structural diagram of a heat-insulation protection layer according to another embodiment of this application;
FIG. 3 is a schematic exploded view of a battery;
FIG. 4 is a close-up view of a part A shown in FIG. 3;
FIG. 5 is a top view of the battery shown in FIG. 3;
FIG. 6 is a cross-sectional schematic view of sectioning along an A-A line shown in FIG. 5;
FIG. 7 is a close-up view of a part B shown in FIG. 6;
FIG. 8 is a schematic diagram of a heat-insulation protection layer subjected to a temperature test on a first surface and a second surface according to an embodiment of this application; and
FIG. 9 is a schematic diagram of a heat-insulation protection layer subjected to a temperature test on a first surface and a second surface according to another embodiment of this application.

**List of reference numerals:**

| Reference numeral | Name | Reference numeral | Name |
|---|---|---|---|
| 10 | heat-insulation protection layer | 13 | third-layer structure |
| 10a | second surface | 20 | box |
| 10b | first surface | 30 | cover |
| 11 | first-layer structure | 40 | battery pack |
| 12 | second-layer structure | 41 | battery pressure relief mechanism |

The objective fulfillment, functional characteristics, and advantages of this application will be described in more detail with reference to the drawings.

### DETAILED DESCRIPTION OF EMBODIMENTS

The following clearly and thoroughly describes the technical solutions in some embodiments of this application with reference to the drawings appended hereto. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that all directional indicators (for example, up, down, left, right, front, back, and so on) in the embodiments of this application are merely used to explain a relative position relationship, movement state and the like between components in a specific posture (as shown in the drawings). When the specific posture changes, the directional indicators change accordingly.

In this application, unless otherwise expressly specified and qualified, the terms such as "connection" and "fixing" need to be understood in a broad sense, for example, understood as a fixed connection or a detachable connection or understood as being integrated into a whole; or understood as a mechanical connection or an electrical connection, a direct connection or an indirect connection implemented through an intermediary; or understood as interior communication between two components or interaction between two components. A person of ordinary skill in the art is able to understand the specific meanings of the terms in this application according to specific situations.

In addition, the terms such as "first" and "second" used herein are merely intended for ease of description, but not understood as indicating or implying priority or implicitly specifying the number of technical features mentioned. Therefore, the features preceded by "first" or "second" may explicitly or implicitly include at least one of such features. In addition, the term "and/or" used herein means three parallel solutions. For example, "A and/or B" means A, or B, or both A and B. In addition, the technical solutions of different embodiments may be combined with each other to the extent practicable by a person of ordinary skilled in the art. When a combination of technical solutions is contradictory or impracticable, the combination of technical solutions is considered to be nonexistent and fall outside the protection scope claimed by this application.

Batteries mentioned in this field may be classed into a primary battery and a rechargeable battery depending on rechargeability. Currently, common types of rechargeable batteries include: lead-acid battery, nickel-metal hydride battery, and lithium-ion battery. The lithium-ion battery is widely applied to battery electric vehicles and hybrid vehicles currently. The lithium-ion battery for use in such vehicles possesses a relatively low capacity, but a relatively high output current, a relatively high charge current, and a long lifespan in spite of a relatively high cost.

The battery described in the embodiments of this application means a rechargeable battery. The following describes some embodiments of this application by primarily using a lithium-ion battery as an example. Understandably, the disclosed embodiments of this application are applicable to any other suitable types of rechargeable batteries. A battery mentioned in an embodiment disclosed herein is directly or indirectly applicable to an appropriate device to power the device.

The battery mentioned in an embodiment disclosed herein means a single physical module that includes one or more battery cells to provide a preset voltage and a preset capacity. A battery cell is an elementary unit of the battery. Depending on the form of packaging, battery cells are generally classed into three types: cylindrical cell, prismatic cell, and pouch cell. The following description mainly focuses on a prismatic cell. Understandably, the embodiments described below are applicable to cylindrical cells or pouch cells in some aspects.

A battery cell includes a positive electrode plate, a negative electrode plate, an electrolyte solution, and a separator. A lithium-ion battery cell works primarily by movement of lithium ions between the positive electrode plate and the negative electrode plate. A thin film structure compounded of three layers of materials in a cylindrical cell is wound into a cylinder-shaped electrode assembly. The thin film structure in a prismatic cell is wound or stacked to form an electrode assembly in the approximate shape of a cuboid.

In a typical battery cell structure, a battery cell includes a shell, an electrode assembly, and an electrolyte solution. The electrode assembly is accommodated in the shell of the battery cell. The electrode assembly includes a positive electrode plate, a negative electrode plate, and a separator. The shell includes a housing and an end cap. The shell includes an accommodation cavity formed by a plurality of walls and includes an opening. The end cap is disposed at the opening to close the accommodation cavity. The accommodation cavity further accommodates an electrolyte solution in addition to the electrode assembly. The positive electrode plate and the negative electrode plate in the electrode assembly each include a tab. To prevent a large electrical current from tripping the circuit, a plurality of positive tabs are stacked together, and a plurality of negative tabs are stacked together. Through a connecting component, the tabs are electrically connected to electrode terminals located outside the battery cell. The electrode terminals generally include a positive electrode terminal and a negative electrode terminal. For a prismatic cell, the electrode terminals are generally disposed at the end cap part. A plurality of battery cells are connected together in series and/or in parallel through electrode terminals, so as to be applied in various scenarios.

In high-power application scenarios such as electric vehicles, a battery is applied in different hierarchical forms such as a battery cell, a battery module, and a battery. The battery module is formed by electrically connecting a specific quantity of battery cells together and putting the battery cells into a frame, so as to protect the battery cells from external impact, heat, vibration, and the like. The battery is a final state of a battery system mounted in an electric vehicle. A battery typically includes a box configured to package one or more battery cells. The box generally includes a cover and a box shell.

A plurality of mounting points for connecting to the vehicle body are disposed on the rim of the box or in the middle of the box shell. In order to improve the stability of the connection between the vehicle body and the battery, a mounting portion is usually disposed at the mounting points.

In some battery production and processing technologies, a plurality of battery cells are integrated to form a battery module first, and then the battery module is packaged in the battery box to form a battery pack or battery box.

A typical battery module generally includes two end plates. A plurality of battery cells are arranged between the two end plates. An end plate equipped with an output electrode of the battery module is also referred to as an output electrode end plate. An end plate without the output electrode of the battery module is also referred to as a non-output electrode end plate.

A plurality of battery modules in one row may be packaged in the battery pack, or a plurality of battery modules in a plurality of rows may be packaged in the battery pack. The plurality of battery modules in a plurality of rows may be arranged in double rows and multiple columns, multiple rows and double columns, multiple rows and multiple columns, or the like. Taking a battery pack containing double rows and multiple columns of battery modules as an example, the first end plate of each column is generally a head output electrode plate. The two adjacent end plates between two rows of battery modules are middle non-output electrode end plates. The last end plate of each column is a tail non-output electrode end plate. The head output electrode end plate and one of the middle non-output electrode end plates belong to the first row of battery modules. One of the middle non-output electrode end plates and the tail output electrode end plate belong to the second row of battery modules.

The battery module is packaged into the battery box by means of tooling. A clamping mechanism for clamping the battery module, such as a claw or a suction cup, is usually disposed on the tooling. When a battery module is packaged by using tooling that includes a claw, a claw groove that matches the claw is generally disposed on one side, oriented away from the battery cell, of the end plate, so that the claw can be inserted into the claw groove to clamp and transport the battery module.

The development of the battery technology needs to consider a variety of design factors, including performance parameters such as energy density, cycle life, discharge capacity, charge rate, and discharge rate, and also needs to consider the production cost and processing process of the batteries, so as to improve the quality and production efficiency of the batteries.

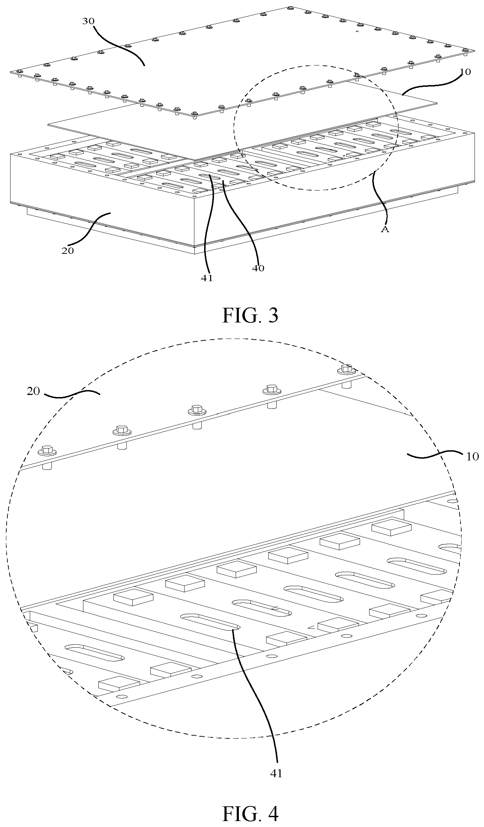

As shown in FIG. 3, the battery generally includes a box and a battery pack disposed in the box. The battery pack includes at least one battery cell. The box includes a cover. The cover is generally made of a steel material, an aluminum material, or a heat-resistant polymer material, and forms an outer envelope structure of the battery. Generally, during charging of a lithium battery, gas is emitted due to the chemical reactions inside the lithium battery, and causes the internal air pressure of the lithium battery to increase. Due to the high energy density of the lithium battery, when the internal air pressure of the lithium battery is overly high, the lithium battery is very prone to catch fire and explode. Therefore, when the internal air pressure of the lithium battery reaches a specified value, the gas needs to be exhausted to release the pressure.

For this purpose, a battery pressure relief mechanism is disposed on the battery pack. When the battery is in normal operation, exhausting gas through the battery pressure relief mechanism is a recurrent process. During the exhausting, the battery operates normally, and the temperature of the heat carried by the exhausted gas is not high, and is generally not greater than 100 °C. The cover of the box can withstand a temperature of 100 °C, so that the box is not damaged.

However, when the battery is thermally runaway, the heat generated by thermal runaway can reach hundreds or thousands of degrees Celsius. At this time, in some cases, the cover may be damaged due to failure to withstand the high temperature. The damaged point of the cover provides a heat transfer channel for the heat generated by the thermal runaway, and the heat is diffused to the outside of the box to generate open flames, thereby being prone to cause a fire.

In order to reduce the risk of damage caused by heat to the outer envelope of the battery pack during thermal runaway of the battery and reduce the risk of heat leaking to the outside to generate open flames and fire,

this application provides a heat-insulation protection layer 10. The heat-insulation protection layer 10 includes a first surface 10b and a second surface 10a oriented back-to-back against each other. The first surface 10b is configured to face a heat source. The thickness direction of the heat-insulation protection layer 10 with a thickness between the first surface 10b and the second surface 10a is defined as an axial direction, and the direction intersecting the thickness direction at an angle is defined as a transverse direction. An axial heat transfer coefficient of the heat-insulation protection layer along the axial direction is T1, and a transverse heat transfer coefficient of the heat-insulation protection layer along the transverse direction is T2, satisfying: T1 < T2, thereby preventing the temperature of the second surface from exceeding 1200 °C when the temperature of the first surface is less than or equal to 1600 °C.

The heat source means a device capable of generating heat, for example, an electrical device that includes a battery pack. The battery pack includes at least one battery cell. Heat is generated by the battery cell in the case of thermal runaway.

The first surface and the second surface being oriented back-to-back against each other means that, for example, in a cube structure containing six surfaces, that is, top, bottom, left, right, front, and rear surfaces, the first surface and the second surface oriented back-to-back against each other may be the top surface and the bottom surface, the left surface and the right surface, or the front surface and the rear surface. That is, the orientation of the first surface is opposite to the orientation of the second surface.

The thickness direction of the heat-insulation protection layer with a thickness between the first surface and the second surface is an axial direction, and the direction intersecting the thickness direction at an angle is a transverse direction, which means that a thickness of the heat-insulation protection layer is formed between the first surface and the second surface, and the thickness direction is defined as an axial direction, and the direction intersecting the axial direction at an angle is defined as a transverse direction. For example, the direction perpendicular to the thickness direction is a transverse direction. Definitely, the transverse intersection with the axial direction is not necessarily perpendicular intersection. In other words, the angle between the transverse direction and the axial direction is not necessarily a right angle, and the angle between the transverse direction and the axial direction may be an obtuse angle or an acute angle. Preferably, the transverse direction is perpendicular to the axial direction. For example, using a battery as an example, the battery pressure relief mechanism is on a plane, and the heat-insulation protection layer is laid flat above the battery pressure relief mechanism. The first surface is disposed opposite to the battery pressure relief mechanism. A thickness exists between the first surface and the second surface. The thickness direction is an axial direction, and the direction perpendicular to the axial direction is a transverse direction.

In order to: (i) improve the heat insulation effect of the heat-insulation protection layer; (ii) enable the heat to be quickly dissipated from the first surface in the heat-insulation protection layer, that is, enable the heat to be quickly dissipated along the transverse direction; and (iii) hinder the heat from being transferred from the first surface to the second surface, that is, slow down the heat transfer along the axial direction, it is hereby defined that the axial heat transfer coefficient of the heat-insulation protection layer along the axial direction is T1, and the transverse heat transfer coefficient of the heat-insulation protection layer along the transverse direction is T2, satisfying: T1 < T2. In this way, when the transverse heat transfer coefficient is greater than the axial heat transfer coefficient, the heat is quickly dissipated from the first surface. The heat is depleted when the heat is transferred to the second surface, so that the temperature of the second surface falls within a preset range.

In the battery, the heat-resistant cover is typically made of a steel material or an aluminum material, and forms an outer envelope structure of the battery. The melting point of the steel material is approximately 1500 °C, and the melting point of the aluminum material is approximately 660 °C. When the temperature of the second surface is preset to be less than or equal to 1200 °C, the steel and aluminum covers are prevented from being damaged by heat.

That the temperature of the second surface does not exceed 1200 °C when the temperature of the first surface is less than or equal to 1600 °C means that the temperature of the second surface does not exceed 1200 °C when the first surface faces the heat source and the temperature of the first surface is less than or equal to 1600 °C.

Especially, in a battery, for a battery formed of battery cells of different energy density values E, when thermal runaway occurs, the thermal runaway temperature varies with the battery cell energy density E. For example, when the battery cell energy density E is less than or equal to 1000 Wh/L, the thermal runaway temperature is 1600 °C or below. In this case, with the heat-insulation protection layer being applied to the battery, when the temperature of the first surface is less than or equal to 1600 °C, the temperature of the second surface does not exceed 1200 °C, thereby effectively preventing damage to the outer envelope of the battery.

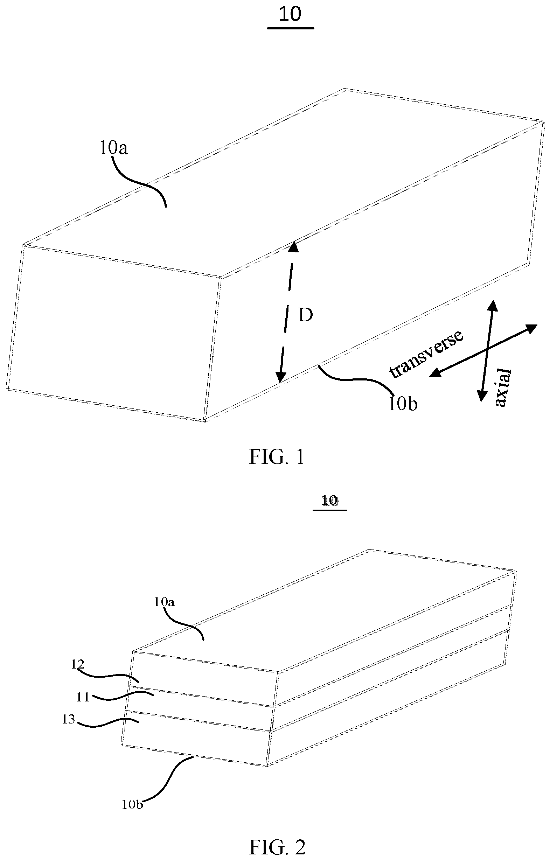

As shown in FIG. 1, a heat-insulation protection layer 10 includes a first surface 10b and a second surface 10a oriented back-to-back against each other.

That the first surface is configured to face the heat source means that the heat source is located on one side of the first surface. The heat generated by the heat source may directly radiate to the first surface first. For example, it is assumed that the structure of the heat-insulation protection layer is similar to a cube structure, the first surface is a lower surface, and the second surface is an upper surface. In this case, the heat source is located below the lower surface. When the heat source generates heat, the heat radiates to the first surface first, and then gradually radiates to the second surface through the first surface.

When the axial heat transfer coefficient T1 and the transverse heat transfer coefficient T2 satisfy T1 < T2 and the temperature of the first surface is less than or equal to 1600 °C, the temperature of the second surface does not exceed 1200 °C, which means that, when the temperature of the heat radiating from the heat source is 1600 °C or less, the temperature of the heat gradually radiating to the second surface through the first surface fades, thereby preventing the temperature of the second surface from exceeding 1200 °C.

The heat-insulation protection layer of this application is designed to exert a heat insulation effect. During thermal runaway of a battery, the heat-insulation protection layer can reduce the risk of damage caused by heat to an outer envelope of a battery pack, and reduce the risk of heat leaking to the outside to generate open flames and fire. The heat-insulation protection layer includes a first surface and a second surface oriented back-to-back against each other. The first surface is configured to face a heat source. An axial heat transfer coefficient T1 of the heat-insulation protection layer is less than a transverse heat transfer coefficient T2 of the heat-insulation protection layer. Heat generated by the heat source radiates to the first surface. When the first surface faces the heat source and the temperature of the first surface is less than or equal to 1600 °C, that is, when the heat radiates to the first surface and makes the temperature of the first surface be less than or equal to 1600 °C, the temperature of the second surface does not exceed 1200 °C. In this way, when a specified amount of heat radiates from the heat source, the heat-insulation protection layer can effectively block the heat and control the temperature to fall within a specified range, thereby solving the problem of high temperature generated on the second surface, and reducing the risk that the high temperature damages the structure disposed at the second surface.

In the battery, the cover is typically made of a steel material, an aluminum material, or a heat-resistant polymer material currently, and forms an outer envelope structure of the battery. The melting point of the steel material is approximately 1500 °C, the melting point of the aluminum material is approximately 660 °C, and the melting point of the polymer material is 600 °C or less. The battery cells of different energy density values E generate different amounts of heat in the case of thermal runaway. For example, when the battery cell energy density E is 550 Wh/L, the heat generated by thermal runaway is approximately 750 °C to 1000 °C. When the battery cell energy density E is 750 Wh/L, the heat generated by thermal runaway is approximately 1200 °C to 1500 °C. When the battery cell energy density E is 1000 Wh/L, the heat generated by thermal runaway is approximately 1600 °C.

Existing technical solutions primarily use materials such as a mica board as an upper cover for protection. However, with the increase of the battery cell energy density E, the thermal shock generated by thermal runaway of the battery cell intensifies gradually. For a battery product with an energy density higher than 700 Wh/L, the mica board is no longer enough to provide effective protection. When the battery is thermally runaway, the mica board is prone to damage, and the temperature on the back of the mica board rises rapidly, and even results in damage to the upper cover.

When the battery cell energy density E is 750 Wh/L or above and thermal runaway occurs, the steel and aluminum materials in the existing technical solutions are no longer protected effectively. Therefore, it is necessary to use the heat-insulation protection layer of this application. Through the thermal insulation effect of the heat-insulation protection layer, the temperature of the heat reaching the cover after passing through the heat-insulation protection layer is prevented from being overly high, thereby reducing the risk of damage to the cover and reducing severer hazards that may occur.

With the heat-insulation protection layer of this application, the temperature of the second surface does not exceed 1200 °C when the axial heat transfer coefficient T1 is less than the transverse heat transfer coefficient T2 of the heat-insulation protection layer, the first surface faces the heat source, and the temperature of the first surface is less than or equal to 1600 °C. This ensures the possibility of using the steel cover, prevents the battery pack from being perforated at a position directly opposite to the battery pressure relief mechanism, and prevents open flames from occurring at the perforation position directly.

Further, T1 and T2 satisfy: T2/T1 ≥ 2.

As can be seen from the data in Table 2 below, when T2/T1 ≥ 2 and the temperature of the first surface is less than or equal to 1600 °C, the temperature of the second surface does not exceed 1200 °C. Understandably, when the battery cell energy density E is 1000 Wh/L, the heat generated by thermal runaway is approximately 1600 °C. Therefore, when the temperature of the first surface is equal to 1600 °C, the temperature of the second surface is 1167 °C; when the temperature of the first surface is less than 1600 °C, the temperature of the second surface does not exceed 1200 °C.

Further, T1 and T2 satisfy: T2/T1 ≥ 100.

As can be seen from the data in Table 2 below, when T2/T1 ≥ 100, the temperature of the second surface is lower than 927 °C. In order to reduce the risk that the temperature of the second surface reaches 1000 °C or above, the T2/T1 ratio is set to be greater than or equal to 100.

Further, T1 satisfies: 0.1 W/(m×K) ≤ T1 ≤ 50 W/(m×K); and/or, T2 satisfies: 100 W/(m×K) ≤ T2 ≤ 1500 W/(m×K).

In order for the heat transfer coefficient of the heat-insulation protection layer in the transverse direction to be greater than the heat transfer coefficient in the axial direction, the axial heat transfer coefficient T1 of the heat-insulation protection layer satisfies: 0.1 W/(m×K) ≤ T1 ≤ 50 W/(m×K), and the transverse heat transfer coefficient T2 satisfies: 100 W/(m×K) ≤ T2 ≤ 1500 W/(m×K).

To make the value of the axial heat transfer coefficient T1 relatively small and make the heat conduction slow, T1 is set to satisfy: 0.1 W/(m×K) ≤ T1 ≤ 50 W/(m×K).For example, T1 is 0.1 W/(m×K), 0.5 W/(m×K), 10 W/(m×K), 20 W/(m×K), 30 W/(m×K), 40 W/(m×K), 50 W/(m×K), or a value falling within a range formed by any two thereof.

To make the value of the transverse heat transfer coefficient T2 relatively large and make the heat conduction quick, T2 is set to satisfy: 100W/(m×K) ≤ T2 ≤ 1500 W/(m×K). T2 may be 100 W/(m×K), 200 W/(m×K), 300 W/(m×K), 400 W/(m×K), 500 W/(m, K), 600 W/(m×K), 700 W/(m×K), 800 W/(m×K), 900 W/(m×K), 1000 W/(m×K), 1500 W/(m×K), or a value falling within a range formed by any two thereof.

Further, the heat source includes a battery pack. The battery cell energy density of the battery pack is defined as E, satisfying: E ≤ 1000. T2 and E satisfy a relation: T2/E ≥ 0.1. T2 is in units of W/(m×K), and E is in units of Wh/L.

Energy density means the amount of energy stored per unit space or per unit mass. The energy density of a battery is the electrical energy released per unit volume or per unit mass of the battery on average.

A battery cell is a minimum unit of a battery system. M battery cells form a module, and N modules form a battery pack. This is the basic structure of a battery.

As implied by the name, the battery cell energy density is the energy density of a single battery cell.

The heat generated by thermal runaway varies depending on the battery cell energy density E. In order to make the heat-insulation protection layer capable of heat-insulation protection when the battery cell energy density E falls within a specified range, as shown in Table 1 below, it is verified through experiments that when E ≤ 1000 Wh/L, the heat generated by thermal runaway is 1600°C or less, and the temperature of the first surface is less than or equal to 1600 °C. When the ratio of the transverse heat transfer coefficient T2 to the battery cell energy density E is greater than or equal to 0.1 and when the temperature of the first surface of the heat-insulation protection layer is less than or equal to 1600 °C, the temperature of the second surface does not exceed 1200 °C.

Further, the heat source includes a battery pack. The battery cell energy density of the battery pack is defined as E, satisfying: E ≤ 1000. T2 and E satisfy a relation: 0.1 ≤ T2/E ≤ 2.73. T2 is in units of W/(m×K), and E is in units of Wh/L.

The heat generated by thermal runaway varies depending on the battery cell energy density E. In order to make the heat-insulation protection layer capable of heat-insulation protection when the battery cell energy density E falls within a specified range, as shown in Table 1 below, it is verified through experiments that when E ≤ 1000 Wh/L, the heat generated by thermal runaway is 1600°C or less, and the temperature of the first surface is less than or equal to 1600 °C. When the ratio of the transverse heat transfer coefficient T2 to the battery cell energy density E is greater than or equal to 0.1 and when the temperature of the first surface of the heat-insulation protection layer is less than or equal to 1600 °C, the temperature of the second surface does not exceed 1200 °C. In addition, the ratio of the transverse heat transfer coefficient T2 to the battery cell energy density E is less than or equal to 2.73, thereby reducing the cost of preparing the heat-insulation protection layer. Therefore, when E ≤ 1000, T2 and E satisfy the relation: 0.1 ≤ T2/E ≤ 2.73.

Further, the heat source includes the battery pack, and the battery cell energy density of the battery pack is defined as E, satisfying: E ≤ 550 Wh/L. T2 and E satisfy the relation: 1.82 ≤ T2/E ≤ 2.73.

As shown in Table 1 below, as verified by experiments, when E ≤ 550 Wh/L, the heat generated by thermal runaway is 1000 °C or less, and the temperature of the first surface is less than or equal to 1000 °C. When T2 and E satisfy the relation: 1.82 ≤ T2/E ≤ 2.73, where T2 is in units of W/(m×K) and E is in units of Wh/L, that is, when the ratio of the transverse heat transfer coefficient T2 to the battery cell energy density E ranges from 1.82 to 2.73 and when the temperature of the first surface of the heat-insulation protection layer is less than or equal to 1000 °C, the temperature of the second surface does not exceed 600 °C.

When the first surface faces the heat source and the temperature of the first surface is less than or equal to 1000 °C, the temperature of the second surface does not exceed 600 °C, thereby making it convenient to use an aluminum material as a cover.

Considering that in the prior art, in a battery in which the battery cell energy density E is high, steel and aluminum materials are typically used as covers. The melting point of the steel material is approximately 1500 °C, and the melting point of the aluminum material is approximately 660 °C. In order to achieve the wide application of the aluminum material, the heat-insulation protection layer of this application exerts a further heat insulation effect. When the first surface faces the battery that is thermally runaway and the heat generated by the thermal runaway makes the temperature of the first surface less than or equal to 1000 °C, the temperature of the second surface does not exceed 600 °C. In this way, the aluminum material can also be used as a cover when the temperature is relatively high.

Understandably, the temperature of the second surface is a temperature at the center of the second surface.

The center of the second surface means a part different from the edge of the second surface on the second surface.

Generally, the edge of a heat transfer medium is in contact with air, and the heat dissipation effect at the edge is relatively good. However, heat is dissipated slowly at the center of the heat transfer medium. Consequently, the temperature at the center of the heat transfer medium is higher than the temperature of other parts. Based on this, as long as the temperature at the center of the second surface of the heat-insulation protection layer is lower than 1200 °C, the overall temperature of the second surface of the heat-insulation protection layer is lower than 1200 °C.

Further, the heat source includes a battery pack. The battery cell energy density of the battery pack is defined as E, and the thickness of the heat-insulation protection layer is defined as D. E and D satisfy the relation: D/E ≥ 1.8× 10⁻³, E ≤ 550 Wh/L, E is in units of Wh/L, and D is in units of mm.

The thickness of the heat-insulation protection layer, defined as D, means a distance between the first surface and the second surface.

With the increase of the battery cell energy density E, when the battery cell is thermally runaway, chain reactions that occur inside the battery cell in a short period are more intense, the temperature caused by the thermal runaway of the battery cell is higher, and the required thickness of the heat-insulation protection layer is larger. When the battery cell energy density E is high enough, the thermal runaway temperature of the battery cell is relatively high, a minimum value of the thickness D of the heat-insulation protection layer is exhibited to ensure a good protection effect of the insulation layer, and therefore, a minimum value of the D/E ratio is exhibited. When the battery cell energy density E is low enough, the thermal runaway temperature of the battery cell is relatively low, and a maximum value of the thickness D of the heat-insulation protection layer is exhibited to ensure cost-effectiveness and prevent design redundancy while satisfying the thermal runaway protection requirement, and therefore, a maximum value of D/E is exhibited.

As shown in Table 3 below, as verified by experiments, when E ≤ 550 Wh/L, the heat generated by thermal runaway is 1000 °C or less, and the temperature of the first surface is less than or equal to 1000 °C. When E and D satisfy: D/E ≥ 1.8×10⁻³, where E is in units of Wh/L and D is in units of mm, and when the temperature of the first surface is less than or equal to 1000 °C, the temperature of the second surface does not exceed 700 °C.

Further, the heat source includes a battery pack. The battery cell energy density of the battery pack is defined as E, and the thickness of the heat-insulation protection layer is defined as D, where D ≥ 2. E and D satisfy the relation: D/E ≥ 2.0× 10⁻³, where E is in units of Wh/L, and D is in units of mm.

As shown in Table 3 below, as verified by experiments, when D ≥ 2 and E and D satisfy the relation D/E ≥ 2.0× 10⁻³, E is less than or equal to 1000 Wh/L. When E ≤ 1000 Wh/L, the heat generated by thermal runaway is 1600 °C or less, and the temperature of the first surface is less than or equal to 1600 °C. When the temperature of the first surface is less than or equal to 1600 °C, the temperature of the second surface does not exceed 1200 °C.

Further, the heat source includes a battery pack. The battery cell energy density of the battery pack is defined as E, and the thickness of the heat-insulation protection layer is defined as D. E and D satisfy the relation: D/E ≥ 7.0×10⁻³, where E ≤ 1000.

When the first surface faces the heat source and the temperature of the first surface is less than or equal to 1600 °C, the temperature of the second surface does not exceed 600 °C. In this way, the aluminum material can also be used as a cover when the temperature is relatively high.

Considering that in the prior art, in a battery in which the battery cell energy density E is high, steel and aluminum materials are typically used as covers. The melting point of the steel material is approximately 1500 °C, and the melting point of the aluminum material is approximately 660 °C. In order to achieve the wide application of the aluminum material, the heat-insulation protection layer of this application exerts a further heat insulation effect. When the first surface faces the battery that is thermally runaway and the heat generated by the thermal runaway makes the temperature of the first surface less than or equal to 1600 °C, the temperature of the second surface does not exceed 600 °C. In this way, the aluminum material can also be used as a cover when the temperature is relatively high.

As shown in Table 3 below, as verified by experiments, when E ≤ 1000 Wh/L, the heat generated by thermal runaway is 1600 °C or less, and the temperature of the first surface is less than or equal to 1600 °C. When E and D satisfy: D/E ≥ 7.0×10⁻³, where E is in units of Wh/L and D is in units of mm, and when the temperature of the first surface is less than or equal to 1600 °C, the temperature of the second surface does not exceed 600 °C.

Further, E and D satisfy the relation: D/E ≤ 5.0× 10⁻³, where E is in units of Wh/L, and D is in units of mm.

In other words, when 1.8×10⁻³ ≤ D/E ≤ 5.0×10⁻³ or 2.0×10⁻³ ≤ D/E ≤ 5.0×10⁻³, the thickness D of the heat-insulation protection layer is ensured not to be overly thick. In this case, the heat-insulation protection layer is prevented from being damaged and no design redundancy exists.

Further, T1, T2, and E satisfy the relation: (T2/T1)/E ≥ 0.002. T1 and T2 are in units of W/(m×K), and E is in units of Wh/L.

With the increase of the battery cell energy density E, the thermal shock generated by the thermal runaway of the battery is more intense, and the thermal shock temperature is higher. In this case, a higher T2/T1 ratio value of the heat-insulation protection layer is required to reduce the heat transfer along the axial direction while conducting heat quickly along the transverse direction to reduce the heat in the central region of the thermal shock, so that the temperature is lower at the center of the second surface of the heat-insulation protection layer. When the battery cell energy density E reaches a maximum value (the thermal runaway temperature makes the temperature of the first surface reach 1600 °C), an extreme value of T2/T1 is exhibited to ensure that the heat generated by the thermal shock can be quickly conducted away through the heat-insulation protection layer, and at the same time, to reduce the heat conducted in the axial direction, ensure that the temperature of the second surface of the heat-insulation protection layer is not overly high, and ensure the integrity of the cover structure. When the battery cell energy density E reaches a minimum value, an extreme value of the transverse heat transfer coefficient T2/T1 of the heat-insulation protection layer is exhibited to reduce the cost of the heat-insulation protection layer while meeting the requirement of rapid heat conduction in the transverse direction. Generally, a higher T2/T1 ratio means that a higher material anisotropy is required, and that the cost of preparing the heat-insulation protection layer is higher.

As shown in Table 2 below, as verified by experiments, when E ≤ 1000 Wh/L, the heat generated by thermal runaway is 1600 °C or less, and the temperature of the first surface is less than or equal to 1600 °C. When (T2/T1)/E ≥ 0.002 and the temperature of the first surface is less than or equal to 1600 °C, the temperature of the second surface does not exceed 1200 °C.

Further, T1, T2, and E satisfy the relation: 0.002 ≤ (T2/T1)/E ≤ 29.091. T1 and T2 are in units of W/(m×K), and E is in units of Wh/L.

As shown in Table 2 below, as verified by experiments, when E ≤ 1000 Wh/L, the heat generated by thermal runaway is 1600 °C or less, and the temperature of the first surface is less than or equal to 1600 °C. Depending on the required energy density E of the battery cell, the battery cell energy density E and the ratio (T2/T1) of the transverse heat transfer coefficient T2 to the axial heat transfer coefficient T1 of the heat-insulation protection layer satisfy the following relational expression:
0.002 ≤ (T2/T1)/E ≤ 29.091, where T1 and T2 are in units of W/(m×K), and E is in units of Wh/L. With the above relational expression satisfied, when the temperature of the first surface is less than or equal to 1600 °C, the temperature of the second surface does not exceed 1200 °C. For example, (T2/T1)/E may be 0.002, 0.010, 0.030, 0.050, 0.080, 0.10, 0.50, 0.80, 1.0, 3.0, 5.0, 8.0, 10, 15, 20, 25, 29, or a value falling within a range formed by any two thereof. In addition, (T2/T1)/E is controlled to be less than or equal to 29.091, thereby reducing the cost of preparing the heat-insulation protection layer and improving the cost-effectiveness.

Further, T1, T2, and E satisfy the relation: 10 ≤ (T2/T1)/E ≤ 29.091. T1 and T2 are in units of W/(m×K), and E is in units of Wh/L.

As shown in Table 2 below, as verified by experiments, when E ≤ 1000 Wh/L, the heat generated by thermal runaway is 1600 °C or less, and the temperature of the first surface is less than or equal to 1600 °C. When 10 ≤ (T2/T1)/E ≤ 29.091, where T1 and T2 are in units of W/(m×K) and E is in units of Wh/L, and when the temperature of the first surface is less than or equal to 1600 °C, the temperature of the second surface does not exceed 600 °C.

Further, T1, T2, and E satisfy the relation: 18 ≤ (T2/T1)/E ≤ 29.091, and E ≤ 550.

As shown in Table 2 below, as verified by experiments, when E ≤ 550 Wh/L, the heat generated by thermal runaway is 1000 °C or less, and the temperature of the first surface is less than or equal to 1000 °C. When 18 ≤ (T2/T1)/E ≤ 29.091, where T1 and T2 are in units of W/(m×K) and E is in units of Wh/L, and when the temperature of the first surface is less than or equal to 1000 °C, the temperature of the second surface does not exceed 600 °C.

Further, the heat-insulation protection layer includes a graphite layer. The graphite material of the graphite layer is flake-shaped. The flake graphite material is arranged in an oriented layered structure.

The heat-insulation protection layer may be a single layer made of a single material, or may be a composite material formed of a plurality of layers.

The single material achieves anisotropy of the transverse heat transfer coefficient and the axial heat transfer coefficient. For example, in flake graphite, due to the structural characteristics of the graphite material, the heat transfer coefficient along a direction parallel to the graphite base plane is theoretically up to 2000 W/(m×K). In contrast, the heat transfer coefficient in a direction perpendicular to the base plane is theoretically up to 6 W/(m×K).By controlling the orientation consistency of the graphite flakes, this application can obtain a first protection material with the transverse heat transfer coefficient different from the axial heat transfer coefficient.

Further, the heat-insulation protection layer includes a structure formed by stacking at least two layers. The structure of at least two layers includes a first-layer structure and a second-layer structure. The first-layer structure faces the heat source. The second-layer structure is disposed on one side, oriented away from the heat source, of the first-layer structure. A heat transfer coefficient of the first-layer structure is greater than a heat transfer coefficient of the second-layer structure.

The first-layer structure and the second-layer structure may be made of different materials. By compounding two or more materials, this application achieves a high heat transfer coefficient along the transverse direction and a low heat transfer coefficient along the axial direction.

In addition, the two-layer structure possesses the characteristics of two types of materials, and can form a heat-insulation protection layer that meets the design requirements. For example, the first-layer structure close to the battery pressure relief mechanism is characterized by a relatively high melting point but relatively low strength while the second-layer structure far away from the battery pressure relief mechanism is characterized by a relatively low melting point but relatively high strength. The second-layer structure improves the overall structural strength of the heat-insulation protection layer while the first-layer structure prevents the heat-insulation protection layer from being perforated by melting.

Further, the axial heat transfer coefficient of the first-layer structure is greater than the axial heat transfer coefficient of the second-layer structure.

By setting the axial heat transfer coefficient of the first-layer structure to be greater than the axial heat transfer coefficient of the second-layer structure, the heat of the second-layer structure is depleted in the axial direction when the heat is transferred to the second-layer structure through the first-layer structure, and the temperature is prevented from being overly high on a side, oriented away from the first-layer structure, of the second-layer structure.

For example, the two-layer heat-insulation protection layer may be understood as a material of a high heat transfer coefficient (first-layer structure) used in a direction toward the battery pressure relief mechanism, and a material of a low heat transfer coefficient (second-layer structure) used in a direction away from the pressure relief mechanism. The ultimately compounded material possesses both a high transverse heat transfer coefficient for a side close to the pressure relief mechanism and a low axial heat transfer coefficient. For example, the two-layered heat-insulation protection layer includes graphitic composite metal copper (with the axial heat transfer coefficient T1 being 48 W/(m×K), with the transverse heat transfer coefficient T2 being 587 W/(m×K)), graphitic composite metal nickel (with the axial heat transfer coefficient T1 being 28 W/(m*K), with the transverse heat transfer coefficient T2 being 512 W/(m×K)), graphitic composite metal steel (with the axial heat transfer coefficient T1 being 34 W/(m×K), with the transverse heat transfer coefficient T2 being 525 W/(m×K)), or graphitic composite metal aluminum (with the axial heat transfer coefficient T1 being 48 W/(m×K), with the transverse heat transfer coefficient T2 being 568 W/(m×K)).

Further, the heat-insulation protection layer further includes a third-layer structure. The third-layer structure is disposed on one side, oriented away from the second-layer structure, of the first-layer structure. The third-layer structure faces the heat source. The heat transfer coefficient of the first-layer structure is greater than a heat transfer coefficient of the third-layer structure.

With the three-layer design, the second-layer structure and the third-layer structure are made of a material of a low heat transfer coefficient, and the interlayer (first-layer structure) is made of a material of a high heat transfer coefficient. The heat insulated by the third-layer structure is dissipated to the surroundings quickly through the first-layer structure, and is finally insulated by the second-layer material to ensure that the temperature of the heat reaching the center of the second-layer structure is low enough.

Further, the axial heat transfer coefficient of the first-layer structure is greater than the axial heat transfer coefficient of the third-layer structure.

By setting the axial heat transfer coefficient of the first-layer structure to be greater than the axial heat transfer coefficient of the third-layer structure, the heat insulated by the third-layer structure is dissipated to the surroundings quickly through the first-layer structure after the heat reaches the first-layer structure through the third-layer structure, and the heat is finally insulated by the second-layer material to ensure that the temperature of the heat reaching the center of the second-layer structure is low enough.

As shown in FIG. 2, a heat-insulation protection layer 10 is provided and includes a first-layer structure 11, a second-layer structure 12, and a third-layer structure 13. The first-layer structure 11 is located between the second-layer structure 12 and the third-layer structure 13. The first surface 10b is located at the third-layer structure 13. The second surface 10a is located at the second-layer structure 1.

Further, the first-layer structure is made of copper, nickel, steel, or aluminum. The second-layer structure is a graphite layer. A graphite material of the graphite layer is flake-shaped. The flake graphite material is arranged in an oriented layered structure.

With a relatively high heat transfer coefficient, copper, nickel, steel, or aluminum used as the first-layer structure can dissipate heat quickly. With a relatively low axial heat transfer coefficient T1, the graphite layer used as the second-layer structure can deplete the heat quickly while the first-layer structure dissipates the heat quickly. When the heat is transferred to the second-layer structure, the temperature of the second-layer structure is decreased.

Further, the first-layer structure is made of copper, nickel, steel, or aluminum. The second-layer structure and the third-layer structure are graphite layers. A graphite material of the graphite layers is flake-shaped. The flake graphite material is arranged in an oriented layered structure.

Similarly, the graphite layer possesses a relatively low axial heat transfer coefficient T1 and a relatively high transverse heat transfer coefficient T2. As the third-layer structure, the graphite layer can deplete the heat quickly while the heat is dissipated quickly in the transverse direction. When the heat is transferred to the first-layer structure, the temperature of the first-layer structure is decreased. In addition, the first-layer structure is made of copper, nickel, steel, or aluminum that is of a relatively high heat transfer coefficient, and is configured to dissipate heat quickly. When the heat reaches the second-layer structure, the second-layer structure is a graphite layer, and further depletes the heat quickly while the heat is dissipated quickly in the transverse direction, so that the temperature of the heat transferred to the second surface does not exceed 1200 °C.

Further, this application provides a box. The box is configured to contain an electrical device. The heat-insulation protection layer is disposed on an inner surface of the box. The heat-insulation protection layer employs all technical solutions of all the above embodiments, and therefore, at least achieves all the beneficial effects brought by the technical solutions of the above embodiments, the details of which are omitted here.

The specific position of the heat-insulation protection layer on the inner surface of the box is not particularly limited. The heat-insulation protection layer may be disposed on a part of the inner surface or on the entire inner surface. The disposition method and position of the heat-insulation protection layer are not particularly limited, and may be selected according to actual needs.

As shown in FIG. 3, a box 20 configured to accommodate a battery pack 40 is provided. A cover 30 is disposed at the opening of the box 20. A heat-insulation protection layer 10 is disposed on the inner surface of the cover 30. The heat-insulation protection layer 10 is directly opposite to a battery pressure relief mechanism 41 on a battery pack 40 in the box 20, so that the heat generated by thermal runaway of the battery pack 40 directly impacts the heat-insulation protection layer 10. When the heat of the thermal shock makes the temperature of the first surface of the heat-insulation protection layer be less than or equal to 1600° C, the heat-insulation protection layer can effectively block the heat and control the temperature to fall within a specified range, thereby solving the problem of high temperature generated on the second surface, and reducing the risk that the high temperature damages the structure disposed at the second surface.

Further, this application provides a battery. The battery includes a box and a battery pack disposed in the box. A battery pressure relief mechanism is disposed on the battery pack. A projection of the heat-insulation protection layer on the battery pack covers the battery pressure relief mechanism. The box employs all technical solutions of all the above embodiments, and therefore, at least achieves all the beneficial effects brought by the technical solutions of the above embodiments, the details of which are omitted here.

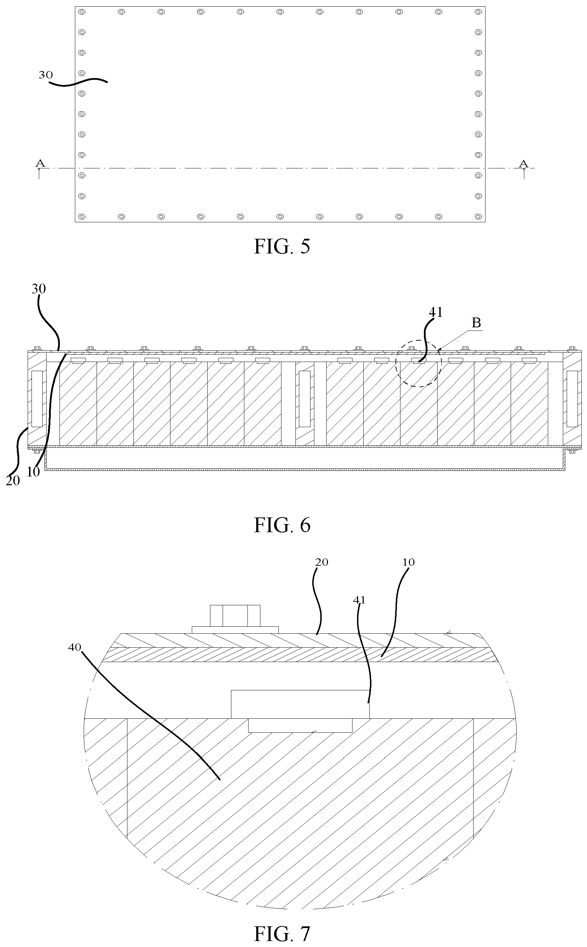

As shown in FIG. 3 to FIG. 7, the battery includes a box 20 and a battery pack 40 disposed in the box 20. Serving as a container, the box 20 is configured to contain the battery pack 40. A battery pressure relief mechanism 41 is disposed on the battery pack 40. The projection of the heat-insulation protection layer 10 on the battery pack 40 covers the battery pressure relief mechanism 41.

During thermal runaway, heat is initially expelled from the battery pressure relief mechanism 41. The part, corresponding to the cover 30, of the battery pressure relief mechanism 41, is most susceptible to heat. Therefore, the projection of the heat-insulation protection layer 10 on the battery pack 40 covers the battery pressure relief mechanism 41, so that the heat-insulation protection layer protects the box from damage in the case of thermal runaway.

Further, the area of the heat-insulation protection layer is larger than the area of the battery pressure relief mechanism.

In the case of thermal runaway, the hot air ejected from the battery pressure relief mechanism assumes a fan shape. With the area of the heat-insulation protection layer being larger than the area of the battery pressure relief mechanism, the heat-insulation protection layer can effectively cover the hot air flow. The area of the heat-insulation protection layer is designed based on the area of the battery pressure relief mechanism and the distance between the heat-insulation protection layer and the battery pressure relief mechanism. The specific area of the heat-insulation protection layer is not limited, and may be determined according to actual needs.

This application provides an electrical device. The electrical device includes the battery. The battery employs all technical solutions of all the above embodiments, and therefore, at least achieves all the beneficial effects brought by the technical solutions of the above embodiments, the details of which are omitted here.

With the heat-insulation protection layer, the battery is protected more securely, and the electrical device containing the above battery is also well protected. The type of the electrical device is not particularly limited, and may be any device powered by electricity, for example, an automobile, a ship, or the like.

### Embodiments

The heat-insulation protection layer is applied in a battery box to verify the protection effect of the heat-insulation protection layer for the box in the case of thermal runaway of the battery.

The same type of batteries are provided. Each battery includes a box and a battery pack. The box is made of a steel material. The battery pack is formed of a plurality of battery cells connected. The battery includes a battery pressure relief mechanism. The battery pressure relief mechanism is actuated when the internal air pressure/temperature of the battery reaches a threshold. A heat-insulation protection layer is designed on an inner surface of the battery pressure relief mechanism, the inner surface being directly oriented toward the box. In other words, the heat-insulation protection layer is disposed on the inner surface of the cover. The axial heat transfer coefficient T1 of the heat-insulation protection layer is less than the transverse heat transfer coefficient T2.

The heat transfer coefficient is tested with reference to the standard ASTM D5470 or ISO-22007-2. The energy density E is an inherent characteristic of the battery, and is a ratio of the amount of charge to the volume of the battery. The battery cell is subjected to a thermal runaway test with reference to the standard GB38031-2020.

It is assumed that the axial direction of the battery is a direction perpendicular to the battery pressure relief mechanism, is hereinafter referred to as "axial direction"; and the direction perpendicular to the axial direction of the battery is a "transverse direction". It is assumed that the heat transfer coefficient of the heat-insulation protection layer along the axial direction is T1, and the heat transfer coefficient along the transverse direction is T2.

Table 1 shows the experimental data of Embodiments 1 to 12 and Comparative Embodiments 1 to 3.

With other conditions unchanged, the parameters such as transverse heat transfer coefficient T2 and the battery cell energy density E are adjusted to test whether the box functions normally under thermal runaway conditions, that is, whether the box is perforated by melting.

As shown in the data in Table 1 below, depending on the requirement on the battery energy density E, the heat transfer coefficient T2 of the heat-insulation protection layer along the transverse direction satisfies the following relational expression:

T2/E ≥ 0.1, where T2 is in units of W/(m×K), and E is in units of Wh/L. With the above relational expression satisfied, the box functions normally under thermal runaway conditions, that is, the box is not perforated by melting.

In addition, the cost of the heat-insulation protection layer is reduced by satisfying 0.1 ≤ T2/E ≤ 2.73, where T2 is in units of W/(m×K), and E is in units of Wh/L. With the increase of the energy density E of the battery, the thermal shock generated by the thermal runaway of the battery is more intense, and the thermal shock temperature is higher. At this time, a higher transverse heat transfer coefficient T2 is required to accelerate the heat transfer along the transverse direction and reduce the temperature at the thermal shock center on the second surface of the heat-insulation protection layer. When the energy density E reaches a maximum value (the thermal runaway temperature makes the temperature of the first surface reach 1600 °C), an extreme value of the transverse heat transfer coefficient T2 of the heat-insulation protection layer is exhibited to ensure that the heat generated by the thermal shock can be quickly conducted away through the heat-insulation protection layer, and at the same time, to reduce the heat conducted in the axial direction, ensure that the temperature of the second surface of the heat-insulation protection layer is not overly high, and ensure the integrity of the box structure. When the energy density E reaches a minimum value, a maximum value of the transverse heat transfer coefficient T2 of the heat-insulation protection layer is exhibited to reduce the cost of the heat-insulation protection layer while meeting the requirement of rapid heat conduction in the transverse direction. Generally, the higher the heat transfer coefficient, the higher the cost of preparing the heat-insulation protection layer.

The following Table 1 shows the actual experimental results. In Comparative Embodiments 1 to 3, the T2/E ratio value is less than the lower limit. In this case, T2 is overly small, and the thermal shock energy is unable to be quickly conducted in the transverse direction, thereby resulting in overtemperature on the second surface of the heat-insulation protection layer, and perforating the heat-insulation protection layer or the box by melting. In Embodiments 10 to 12, the T2/E ratio value increases gradually. With the increase of the T2/E ratio value, the temperature of the second surface of the heat-insulation protection layer declines gradually. However, with further increase of the T2/E ratio value, T2 becomes overly large, and the temperature of the second surface of the heat-insulation protection layer is far less than the melting point of a conventional box material (the melting point of steel is approximately 1500 °C, and the melting point of aluminum is approximately 660 °C), thereby leading to over-design and being costly rather than cost-effective. Preferably, T2/E falls within a range of 0.1 to 2.73, thereby preventing the box from turning red due to overtemperature, and reducing the possibility of igniting external fumes.

As can be seen from Embodiment 9 and Embodiments 10 to 12, when T2 and E satisfy 1.82 ≤ T2/E ≤ 2.73, E is 550 Wh/L, and the temperature of the first surface is less than or equal to 1000 °C, the temperature of the second surface does not exceed 600 °C. Considering that in the prior art, in a battery in which the battery cell energy density E is high, steel and aluminum materials are typically used as covers. The melting point of the steel material is approximately 1500 °C, and the melting point of the aluminum material is approximately 660 °C. In order to achieve the wide application of the aluminum material, the heat-insulation protection layer of this application exerts a further heat insulation effect. When the first surface faces the battery that is thermally runaway and the heat generated by the thermal runaway makes the temperature of the first surface less than or equal to 1000 °C, the temperature of the second surface does not exceed 600 °C. In this way, the aluminum material can also be used as a cover when the temperature is relatively high.

**Table 1 Experimental data**

| Serial number | T2 (w/(m×K)) | E (Wh/L) | T2/E | Functionality | Temperature of second surface of heat-insulation protection layer (°C) | Thickness D | T1 (w/(m×K)) |
|---|---|---|---|---|---|---|---|
| Embodiment 1 | 100 | 1000 | 0.10 | Normal | 1189 | 2 | 50 |
| Embodiment 2 | 100 | 700 | 0.14 | Normal | 921 | 2 | 50 |
| Embodiment 3 | 100 | 550 | 0.18 | Normal | 654 | 2 | 50 |
| Embodiment 4 | 500 | 1000 | 0.50 | Normal | 927 | 2 | 50 |
| Embodiment 5 | 500 | 700 | 0.71 | Normal | 837 | 2 | 50 |
| Embodiment 6 | 500 | 550 | 0.91 | Normal | 607 | 2 | 50 |
| Embodiment 7 | 1000 | 1000 | 1.00 | Normal | 879 | 2 | 50 |
| Embodiment 8 | 1000 | 700 | 1.43 | Normal | 721 | 2 | 50 |
| Embodiment 9 | 1000 | 550 | 1.82 | Normal | 535 | 2 | 50 |
| Comparative Embodiment 1 | 50 | 1000 | 0.05 | Perforated by melting | 1307 | 2 | 50 |
| Comparative Embodiment 2 | 30 | 1000 | 0.03 | Perforated by melting | 1367 | 2 | 50 |
| Comparative Embodiment 3 | 10 | 1000 | 0.01 | Perforated by melting | 1405 | 2 | 50 |
| Embodiment 10 | 1200 | 550 | 2.18 | Normal | 450 | 2 | 50 |
| Embodiment 11 | 1300 | 550 | 2.36 | Normal | 420 | 2 | 50 |
| Embodiment 12 | 1500 | 550 | 2.73 | Normal | 398 | 2 | 50 |

Table 2 shows the experimental data of Embodiments 13 to 24 and Comparative Embodiments 4 to 6.

With other conditions unchanged, the parameters such as transverse heat transfer coefficient T2, the axial heat transfer coefficient T1, and the battery cell energy density E are adjusted to test whether the box functions normally under thermal runaway conditions, that is, whether the box is perforated by melting.

As shown in Table 2, the axial heat transfer coefficient T1 of the heat-insulation protection layer is required to be less than the transverse heat transfer coefficient T2, thereby ensuring that the heat of the thermal shock of the battery can be quickly dissipated along the transverse direction, greatly reducing the heat at the center. In addition, due to the relatively small axial heat transfer coefficient, the heat transfer from the center along the axial direction is relatively slow, thereby reducing the temperature at the center of the second surface of the heat-insulation protection layer, and reducing the risk that the box is burst due to high temperature. Generally, a greater difference between the axial heat transfer coefficient T1 and the transverse heat transfer coefficient T2 is more helpful to achieving the thermal insulation effect of the heat-insulation protection layer. Generally, a higher T2/T1 ratio means that a higher material anisotropy is required, and that the cost of preparing the heat-insulation protection layer is higher.

As shown in Table 2, depending on the required energy density E of the battery, the ratio (T2/T1) of the transverse heat transfer coefficient T2 to the axial heat transfer coefficient T1 of the heat-insulation protection layer satisfies the following relational expression:

(T2/T1)/E ≥ 0.002, where T1 and T2 are in units of W/(m×K), and E is in units of Wh/L. With the above relational expression satisfied, the box functions normally under thermal runaway conditions, that is, the box is not perforated by melting.

In addition, when 0.002 ≤ (T2/T1)/E ≤ 29.091, where T1 and T2 are in units of W/(m×K), and E is in units of Wh/L, the box functions normally under thermal runaway conditions, that is, the box is not perforated by melting. In addition, the problem of high cost of preparing the heat-insulation protection layer is alleviated, and the cost-effectiveness is improved.

With the increase of the battery energy density E, the thermal shock generated by the thermal runaway of the battery is more intense, and the thermal shock temperature is higher. In this case, a higher T2/T1 ratio value of the heat-insulation protection layer is required to reduce the heat transfer along the axial direction while conducting heat quickly along the transverse direction to reduce the heat in the central region of the thermal shock, so that the temperature is lower at the center of the second surface of the heat-insulation protection layer. When the energy density E reaches a maximum value (the thermal runaway temperature makes the temperature of the first surface reach 1600 °C), an extreme value of T2/T1 is exhibited to ensure that the heat generated by the thermal shock can be quickly conducted away through the heat-insulation protection layer, and at the same time, to reduce the heat conducted in the axial direction, ensure that the temperature of the second surface of the heat-insulation protection layer is not overly high, and ensure the integrity of the box structure. When the energy density E reaches a minimum value, an extreme value of the transverse heat transfer coefficient T2/T1 of the heat-insulation protection layer is exhibited to reduce the cost of the heat-insulation protection layer while meeting the requirement of rapid heat conduction in the transverse direction. Generally, a higher T2/T1 ratio means that a higher material anisotropy is required, and that the cost of preparing the heat-insulation protection layer is higher.

The following are the actual experimental results. In Comparative Embodiments 4 to 6, the T2/T1 ratio value is less than the lower limit. In this case, T2 is overly small, and the thermal shock energy is unable to be quickly conducted in the transverse direction, thereby resulting in overtemperature on the second surface of the heat-insulation protection layer, and perforating the heat-insulation protection layer or the box by melting. In Embodiments 22 to 24, the T2/T1 ratio value further increases. With the increase of the T2/T1 ratio value, the temperature of the second surface of the heat-insulation protection layer declines gradually. However, with further increase of the T2/T1 ratio value, T2 becomes overly large, and the temperature of the second surface of the heat-insulation protection layer is far less than the melting point of a conventional box material (the melting point of steel is approximately 1500 °C, and the melting point of aluminum is approximately 660 °C), thereby leading to over-design and being costly rather than cost-effective.

As shown in Table 2, preferably, (T2/T1)/E falls within a range of 0.002 to 29.091, thereby preventing the box from turning red due to overtemperature, and reducing the possibility of igniting external fumes.

As shown in Table 2 below, as can be seen from the data of Embodiments 21 to 24, when 18 ≤(T2/T1)/E ≤ 29.091, E = 550 Wh/L (E = 550 Wh/L, and the thermal runaway temperature is less than or equal to 1000 °C), and the temperature of the first surface is less than or equal to 1000 °C, the temperature of the second surface does not exceed 600 °C. Under such conditions, the aluminum material may be used as a cover.

**Table 2 Experimental data**

| Serial number | E (Wh/L) | T2/T1 | (T2/T1)/E | Functionality | Temperature of second surface of heat-insulation protection layer (°C) | Thickness D |
|---|---|---|---|---|---|---|
| Embodiment 13 | 1000 | 2 | 0.002 | Normal | 1167 | 3 |
| Embodiment 14 | 1000 | 100 | 0.1 | Normal | 927 | 3 |
| Embodiment 15 | 1000 | 10000 | 10 | Normal | 598 | 3 |
| Embodiment 16 | 700 | 2 | 0.003 | Normal | 912 | 3 |
| Embodiment 17 | 700 | 100 | 0.1 | Normal | 837 | 3 |
| Embodiment 18 | 700 | 10000 | 14.3 | Normal | 532 | 3 |
| Embodiment 19 | 550 | 2 | 0.004 | Normal | 654 | 3 |
| Embodiment 20 | 550 | 100 | 0.2 | Normal | 607 | 3 |
| Embodiment 21 | 550 | 10000 | 18 | Normal | 502 | 3 |
| Comparative Embodiment 4 | 1000 | 1 | 0.001 | Perforated by melting | 1357 | 3 |
| Comparative Embodiment 5 | 1000 | 0.5 | 0.0005 | Perforated by melting | 1395 | 3 |
| Comparative Embodiment 6 | 1000 | 0.3 | 0.0003 | Perforated by melting | 1421 | 3 |
| Embodiment 22 | 550 | 12000 | 21.818 | Normal | 450 | 3 |
| Embodiment 23 | 550 | 14000 | 25.455 | Normal | 420 | 3 |
| Embodiment 24 | 550 | 16000 | 29.091 | Normal | 398 | 3 |

Table 3 shows the experimental data of Embodiments 25 to 39.

With other conditions unchanged, the parameters such as thickness D of the heat-insulation protection layer and battery cell energy density E are adjusted to test whether the box functions normally under thermal runaway conditions, that is, whether the box is perforated by melting.

As shown in Table 3, with the increase of the battery cell energy density E, when the battery cell is thermally runaway, chain reactions that occur inside the battery cell in a short period are more intense, the temperature caused by the thermal runaway of the battery cell is higher, and the required thickness of the heat-insulation protection layer is larger. When the battery cell energy density E is high enough, the thermal runaway temperature of the battery cell is relatively high, and a minimum value of the thickness D of the heat-insulation protection layer is exhibited to ensure a good protection effect of the heat-insulation protection layer, and therefore, a minimum value of the D/E ratio is exhibited. When the battery cell energy density E is low enough, the thermal runaway temperature of the battery cell is relatively low, a maximum value of the thickness D of the heat-insulation protection layer is exhibited to ensure cost-effectiveness and prevent design redundancy while satisfying the thermal runaway protection requirement, and therefore, a maximum value of D/E is exhibited.

As shown in Table 3, based on the experimental results, as can be seen from the data of Embodiments 25 to 27, when D/E ≥ 1.8× 10⁻³, E = 550 Wh/L (E = 550 Wh/L, and the thermal runaway temperature is less than or equal to 1000 °C), and the temperature of the first surface is less than or equal to 1000 °C, the temperature of the second surface does not exceed 1200 °C.

As shown in Table 3, as can be seen from the experimental results of Embodiments 28 to 33 and Embodiments 38 and 39, when D ≥ 2, E and D satisfies the relation: D/E ≥ 2.0×10⁻³, E = 700 Wh/L or E = 1000 Wh/L (E = 550 Wh/L, E = 1000 Wh/L, and the thermal runaway temperature is less than or equal to 1600 °C), and the temperature of the first surface is less than or equal to 1600 °C, the temperature of the second surface does not exceed 1200 °C.

As shown in Table 3, as can be seen from the experimental results of Embodiments 38 and 39, when D/E ≥ 7.0× 10⁻³, E = 1000 Wh/L (E = 1000 Wh/L, and the thermal runaway temperature is less than or equal to 1600 °C), and the temperature of the first surface is less than or equal to 1600 °C, the temperature of the second surface does not exceed 600 °C.

As shown in Table 3, as can be seen from the experimental results, E and D satisfy the relation: D/E ≤ 5.0×10⁻³.

In this case, the heat-insulation protection layer is not burst, and no design redundancy exists.

**Table 3 Experimental data**

| Serial number | E (Wh/L) | D (mm) | D/E | Temperature of second surface of heat-insulation protection layer (°C) | Burst | T1 (w/(m×K)) | T2 (w/(m×K)) |
|---|---|---|---|---|---|---|---|
| | | | (mm•L/Wh) | | | | |
| Embodiment 25 | 550 | 1 | 1.8E-03 | 687 | No | 40 | 400 |
| Embodiment 26 | 550 | 3 | 5.5E-03 | 607 | No | 40 | 400 |
| Embodiment 27 | 550 | 5 | 9.1E-03 | 432 | No | 40 | 400 |
| Embodiment 28 | 700 | 2 | 2.9E-03 | 975 | No | 40 | 400 |
| Embodiment 29 | 700 | 3 | 4.3E-03 | 837 | No | 40 | 400 |
| Embodiment 30 | 700 | 5 | 7.1E-03 | 537 | No | 40 | 400 |
| Embodiment 31 | 1000 | 2 | 2.0E-03 | 1176 | No | 40 | 400 |
| Embodiment 32 | 1000 | 3 | 3.0E-03 | 927 | No | 40 | 400 |
| Embodiment 33 | 1000 | 5 | 5.0E-03 | 665 | No | 40 | 400 |
| Embodiment 34 | 550 | 0.5 | 9.1E-04 | \ | Yes | 40 | 400 |
| Embodiment 35 | 550 | 0.7 | 1.3E-03 | \ | Yes | 40 | 400 |
| Embodiment 36 | 700 | 1 | 1.4E-03 | \ | Yes | 40 | 400 |
| Embodiment 37 | 700 | 1.2 | 1.7E-03 | \ | Yes | 40 | 400 |
| Embodiment 38 | 1000 | 7 | 7.0E-03 | 476 | No | 40 | 400 |
| Embodiment 39 | 1000 | 8 | 8.0E-03 | 415 | No | 40 | 400 |

### Embodiment 40

The heat-insulation protection layer is a graphite layer and includes graphite flakes. The graphite material of the graphite layer is flake-shaped. The flake graphite material is arranged in an oriented layered structure. The graphite flake material achieves anisotropy of the transverse heat transfer coefficient and the axial heat transfer coefficient.

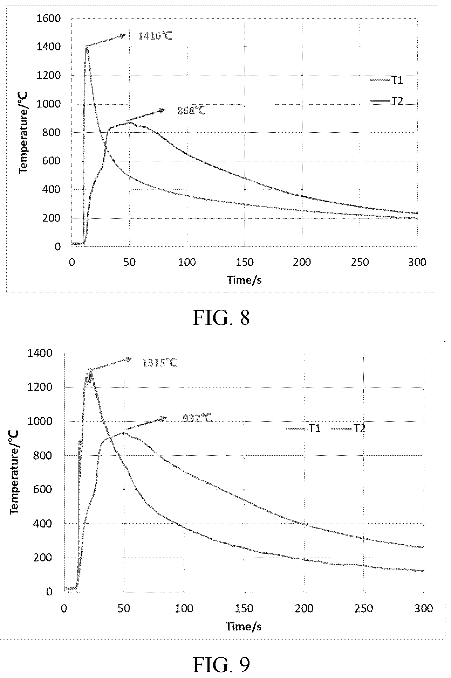

In the experiment, the battery cell energy density E of the battery is 750 Wh/L, the thickness D of the heat-insulation protection layer is 2.5 mm, the axial heat transfer coefficient T1 is 15 W/(m×K), and the transverse heat transfer coefficient T2 is 687 W/(m×K). The upper cover of the box is made of a 0.7 mm-thick metal sheet. The heat transfer coefficient is tested with reference to the standard ASTM D5470 or ISO-22007-2. Thermal runaway of the battery cell is triggered with reference to the standard GB38031-2020. As shown in FIG. 8 below, it is detected that the outlet temperature of the battery cell pressure relief mechanism is 1410 °C. In other words, the temperature of the first surface is 1410 °C. After being blocked by the heat-insulation protection layer, the temperature of the second surface of the heat-insulation protection layer is as low as 868 °C. The heat-insulation protection layer is not damaged after the test.

### Embodiment 41

Two materials are compounded to achieve a high heat transfer coefficient along the transverse direction and a low heat transfer coefficient along the axial direction.

The heat-insulation protection layer includes a first-layer structure (made of nickel metal) and a second-layer structure (graphite layer).

In the experiment, the battery cell energy density E of the battery is 750 Wh/L, the thickness D of the heat-insulation protection layer is 2.5 mm (the thickness of the graphite layer is 1.5 mm, and the thickness of the nickel metal is 1.0 mm), the axial heat transfer coefficient T1 is 28 W/(m×K), and the transverse heat transfer coefficient T2 is 512 W/(m×K). The upper cover of the box is made of a 0.7 mm-thick metal sheet. The heat transfer coefficient is tested with reference to the standard ASTM D5470 or ISO-22007-2. Thermal runaway of the battery cell is triggered with reference to the standard GB38031-2020. As shown in FIG. 9 below, it is detected that the outlet temperature of the battery cell pressure relief mechanism is 1315 °C. In other words, the temperature of the first surface is 1315 °C. After being blocked by the heat-insulation protection layer, the temperature at the center of the back of the sheet metal upper cover is as low as 932 °C. The heat-insulation protection layer is not damaged after the test.

The compounding method may be: coating a graphite layer with a high-temperature-resistant structural adhesive, or, during preparation, coating a surface of the metal substrate with a precursor in advance, and depositing flake graphite on the surface of the metal substrate through a high-temperature graphitization process.

Described above are merely some exemplary embodiments of this application without hereby limiting the patent scope of this application. Any and all equivalent structural variations made by using the content of the specification and the drawings of this application, and direct or indirect use of the technical solutions hereof in other related technical fields without departing from the conception of this application, still fall within the patent protection scope of this application.

## Claims

1. A heat-insulation protection layer, wherein the heat-insulation protection layer (10) comprises a first surface (10b) and a second surface (10a) oriented back-to-back against each other, wherein the first surface is configured to face a heat source;
a thickness direction of the heat-insulation protection layer with a thickness between the first surface and the second surface is defined as an axial direction, and a direction intersecting the thickness direction at an angle is defined as a transverse direction; and
an axial heat transfer coefficient of the heat-insulation protection layer along the axial direction is T1, and a transverse heat transfer coefficient of the heat-insulation protection layer along the transverse direction is T2, satisfying: T1 < T2, so that when a temperature of the first surface is less than or equal to 1600 °C, a temperature of the second surface does not exceed 1200 °C.

2. The heat-insulation protection layer according to claim 1, wherein T1 and T2 satisfy: T2/T1 ≥ 2.

3. The heat-insulation protection layer according to claim 2, wherein T1 and T2 satisfy: T2/T1 ≥ 100.

4. The heat-insulation protection layer according to claim 1, wherein T1 satisfies: 0.1 W/(m×K) ≤ T1 ≤ 50 W/(m×K); and/or
T2 satisfies: 100 W/(m×K) ≤ T2 ≤ 1500 W/(m×K).

5. The heat-insulation protection layer according to any one of claims 1 to 4, wherein the heat source comprises a battery pack, and a battery cell energy density of the battery pack is defined as E, satisfying: E ≤ 1000; T2 and E satisfy a relation: T2/E ≥ 0.1; T2 is in units of W/(m×K), and E is in units of Wh/L.

6. The heat-insulation protection layer according to claim 5, wherein T2 and E satisfy a relation: 0.1 ≤ T2/E ≤ 2.73.

7. The heat-insulation protection layer according to claim 6, wherein the heat source comprises the battery pack, and the battery cell energy density of the battery pack is defined as E, satisfying: E ≤ 550; and T2 and E satisfy a relation: 1.82 ≤ T2/E ≤ 2.73.

8. The heat-insulation protection layer according to any one of claims 1 to 5, wherein the heat source comprises a battery pack, a battery cell energy density of the battery pack is defined as E, and a thickness of the heat-insulation protection layer is defined as D, E and D satisfying a relation: D/E ≥ 1.8×10⁻³, wherein E ≤ 550, E is in units of Wh/L, and D is in units of mm.

9. The heat-insulation protection layer according to any one of claims 1 to 5, wherein the heat source comprises a battery pack, and a battery cell energy density of the battery pack is defined as E, and a thickness of the heat-insulation protection layer is defined as D, satisfying: D ≥ 2; E and D satisfy a relation: D/E ≥ 2.0× 10⁻³; E is in units of Wh/L, and D is in units of mm.

10. The heat-insulation protection layer according to claim 9, wherein the heat source comprises the battery pack, the battery cell energy density of the battery pack is defined as E, and a thickness of the heat-insulation protection layer is defined as D, E and D satisfying a relation: D/E ≥ 7.0× 10⁻³, wherein E ≤ 1000.

11. The heat-insulation protection layer according to claim 8 or 9, wherein E and D satisfy a relation: D/E ≤ 5.0×10⁻³, E is in units of Wh/L, and D is in units of mm.

12. The heat-insulation protection layer according to any one of claims 1 to 5, wherein T1, T2, and E satisfy a relation: (T2/T1)/E ≥ 0.002, T1 and T2 are in units of W/(m×K), and E is in units of Wh/L.

13. The heat-insulation protection layer according to claim 12, wherein T1, T2, and E satisfy a relation: 0.002 ≤ (T2/T1)/E ≤ 29.091.

14. The heat-insulation protection layer according to claim 13, wherein T1, T2, and E satisfy a relation: 10 ≤ (T2/T1)/E ≤ 29.091.

15. The heat-insulation protection layer according to claim 13, wherein T1, T2, and E satisfy a relation: 18 ≤ (T2/T1)/E ≤ 29.091, and E ≤ 550.

16. The heat-insulation protection layer according to any one of claims 1 to 15, wherein the heat-insulation protection layer comprises a graphite layer, a graphite material of the graphite layer is flake-shaped, and the flake graphite material is arranged in an oriented layered structure.

17. The heat-insulation protection layer according to any one of claims 1 to 15, wherein the heat-insulation protection layer comprises a structure formed by stacking at least two layers; the structure of at least two layers comprises a first-layer structure and a second-layer structure; the first-layer structure faces the heat source; the second-layer structure is disposed on one side, oriented away from the heat source, of the first-layer structure; and a heat transfer coefficient of the first-layer structure is greater than a heat transfer coefficient of the second-layer structure.

18. The heat-insulation protection layer according to claim 17, wherein the heat-insulation protection layer further comprises a third-layer structure; the third-layer structure is disposed on one side, oriented away from the second-layer structure, of the first-layer structure; the third-layer structure faces the heat source; and the heat transfer coefficient of the first-layer structure is greater than a heat transfer coefficient of the third-layer structure.

19. The heat-insulation protection layer according to claim 18, wherein an axial heat transfer coefficient of the first-layer structure is greater than an axial heat transfer coefficient of the second-layer structure, and the axial heat transfer coefficient of the first-layer structure is greater than an axial heat transfer coefficient of the third-layer structure.

20. The heat-insulation protection layer according to claim 17, wherein the first-layer structure is made of copper, nickel, steel, or aluminum; the second-layer structure is a graphite layer; a graphite material of the graphite layer is flake-shaped; and the flake graphite material is arranged in an oriented layered structure.

21. The heat-insulation protection layer according to claim 18, wherein the first-layer structure is made of copper, nickel, steel, or aluminum; the second-layer structure and the third-layer structure are graphite layers; a graphite material of the graphite layers is flake-shaped; and the flake graphite material is arranged in an oriented layered structure.

22. A box, configured to contain an electrical device, wherein the heat-insulation protection layer according to any one of claims 1 to 21 is disposed on an inner surface of the box.

23. A battery, wherein the battery comprises the box according to claim 22 and a battery pack disposed in the box, a battery pressure relief mechanism is disposed on the battery pack, and a projection of the heat-insulation protection layer on the battery pack covers the battery pressure relief mechanism.

24. The battery according to claim 23, wherein an area of the heat-insulation protection layer is larger than an area of the battery pressure relief mechanism.

25. An electrical device, wherein the electrical device comprises the battery according to claim 23 or 24.
